# EUROPÄISCHE PATENTANMELDUNG

(11) **EP 4 847 174 A1**
(43) Veröffentlichungstag der Anmeldung: **02.12.2026**
(21) Anmeldenummer: 25178782.6
(22) Anmeldetag: 26.05.2025
(51) Int. Cl.: B23B 27/04, B23B 27/08, B23B 29/04

(54) **SCHNEIDPLATTENEINFÜHRVORRICHTUNG**

(71) Anmelder: CERATIZIT Austria Gesellschaft m.b.H., 6600 Reutte (AT)
(72) Erfinder: MARTH, Noel, 6600 Reutte (AT); GOEBERL, Christian, 6600 Reutte (AT)
(74) Vertreter: Ciesla, Dirk

(57) **Zusammenfassung**

Schneidplatteneinführvorrichtung, umfassend einen Grundkörper (2) mit einer Aufstecknut (3) und einem Einführkorridor (4) mit einer Korridorbodenfläche (5) und einer Korridorseitenfläche (6), wobei die Aufstecknut (3) mittig parallel entlang einer Nutmittenlängsachse (7) in die Länge, mittig parallel entlang einer senkrecht dazu verlaufenden Nutmittentiefachse (8) in die Tiefe und entlang einer senkrecht zur Nutmittenlängsachse (7) und Nutmittentiefachse (8) verlaufenden Nutquerachse (9) in die Breite erstreckt ist, wobei eine Nutmittenlängsebene (10) durch die Nutmittenlängsachse (7) und die Nutmittentiefachse (8) aufgespannt ist, wobei die Aufstecknut (3) ein bezüglich der Nutmittenlängsachse (7) axial offenes Aufstecknutende (12) und eine Nutbreite (11) im Bereich von 0,1 **mm** bis 15 **mm** aufweist, wobei die Korridorseitenfläche (6) durch eine Seitenführungsebene (13) tangierend begrenzt und in Blickrichtung entlang der Nutmittenlängsachse (7) neben und aufseiten der Aufstecknut (3) erstreckt ist, wobei die Seitenführungsebene (13) parallel entlang der Nutmittenlängsebene (10) erstreckt ist.

## Beschreibung

Die vorliegende Erfindung betrifft eine Schneidplatteneinführvorrichtung und ein diese mitumfassendes Schneidplattenset, Werkzeughalterset sowie Kombinationsset.

Bei bekannten Werkzeughaltern mit einem Klemmsitz zur klemmenden Aufnahme einer Schneidplatte wird die Schneidplatte entlang der unteren und oberen Klemmbacken in den Klemmsitz eingeschoben. In der Praxis hat sich gezeigt, dass es feinmotorisch gesehen schwierig ist, die Schneidplatte in den Klemmsitz einzuschieben, erst recht, wenn der Werkzeughalter in einen anderen Halter eingebaut und sich dann noch in einer schwach beleuchteten Kabine eines Bearbeitungszentrums befindet. Die Schneidplatte muss daher üblicherweise mehrfach an den Klemmsitz angesetzt werden, bis sie mit den Klemmbacken fluchtet und entlang dieser in den Klemmsitz eingeschoben werden kann. Bei einem solchen mehrfachen Ansetzen wird die Schneidplatte sehr leicht beschädigt oder geht beim Einbau in einem Bearbeitungszentrum mitunter im Spänebett sogar verloren.

Die Aufgabe der vorliegenden Erfindung besteht folglich darin, eine Schneidplatteneinführvorrichtung und ein diese jeweils mitumfassendes Schneidplattenset, Werkzeughalterset und Kombinationsset bereitzustellen, die die Nachteile des Schneidplatteneinbaus nach dem Stand der Technik beheben.

Die Aufgabe wird durch eine Schneidplatteneinführvorrichtung nach Anspruch 1 gelöst. Vorteilhafte Weiterbildungen sind den abhängigen Ansprüchen zu entnehmen, die untereinander frei kombinierbar sind.

Die Schneidplatteneinführvorrichtung umfasst einen Grundkörper mit einer Aufstecknut und einem Einführkorridor mit einer Korridorbodenfläche und einer Korridorseitenfläche, wobei die Aufstecknut mittig parallel entlang einer Nutmittenlängsachse in die Länge, mittig parallel entlang einer senkrecht dazu verlaufenden Nutmittentiefachse in die Tiefe und entlang einer senkrecht zur Nutmittenlängsachse und Nutmittentiefachse verlaufenden Nutquerachse in die Breite erstreckt ist, wobei eine Nutmittenlängsebene durch die Nutmittenlängsachse und die Nutmittentiefachse aufgespannt ist, wobei die Aufstecknut ein bezüglich der Nutmittenlängsachse axial offenes Aufstecknutende und eine Nutbreite im Bereich von 0,1 mm bis 15 mm aufweist, wobei der Einführkorridor bezüglich der Nutmittenlängsachse axial beidseits offen ist, wobei die Korridorbodenfläche ausgehend von dem Aufstecknutende durch die Aufstecknut unterbrochen ist, wobei die Korridorbodenfläche im Bereich der Aufstecknut parallel zur Nutmittenlängsachse erstreckt ist und/oder gegenüberliegend zum Aufstecknutende parallel zur Nutmittenlängsachse an die Aufstecknut heranreichend erstreckt ist, wobei die Korridorseitenfläche durch eine Seitenführungsebene tangierend begrenzt und in Blickrichtung entlang der Nutmittenlängsachse neben und aufseiten der Aufstecknut erstreckt ist, wobei die Seitenführungsebene parallel entlang der Nutmittenlängsebene erstreckt ist.

Die Funktion der Schneidplatteneinführvorrichtung wird unter Bezugnahme auf eine im Folgenden zunächst näher beschriebene exemplarische Schneidplatte und einen sodann näher beschriebenen exemplarischen Klemmsitz eines Werkzeughalters schließlich näher beschrieben.

Die Schneidplatte ist üblicherweise zum Einstechen und/oder Abstechen ausgebildet und damit für entsprechende Zerspanungsvorgänge geeignet. Bei der Schneidplatte handelt es sich damit üblicherweise um eine Stechplatte.

Die Schneidplatte weist eine Schneidplattendachfläche und aufseiten dieser eine Hauptschneide und daran angeschlossene Spanfläche auf. Die Hauptschneide wird üblicherweise unter einer radialen Bewegung in eine Welle unter einer relativen Drehung bezüglich einer Wellendrehachse einstechend und/oder abstechend bewegt und hebt so einen oder mehrere Späne ab. Der Schneidplatte ist üblicherweise eine Schneidplattenmittenlängsebene zuordenbar, die quer und mittig zur Quererstreckung der Hauptschneide angeordnet ist und die Schneidplatte in zwei üblicherweise symmetrische Hälften teilt.

Die Schneidplatte weist gegenüberliegend zur Schneidplattendachfläche eine Schneidplattenbodenfläche auf, die üblicherweise mittig entlang einer Schneidplattenmittenlängsachse erstreckt ist, die folglich in der Schneidplattenmittenlängsebene erstreckt. Die Schneidplatte weist ferner eine mit der Hauptschneide verbundene vordere Schneidplattenstirnfläche, die damit eine der Hauptschneide zugeordnete stirnseitige Freifläche mitumfasst, und eine gegenüberliegende hintere Schneidplattenstirnfläche auf.

Die Schneidplatte weist ferner eine mit der vorderen Schneidplattenstirnfläche und der hinteren Schneidplattenstirnfläche verbundene rechte Schneidplattenseitenfläche und eine gegenüberliegende linke Schneidplattenseitenfläche auf. Die rechte Schneidplattenseitenfläche und die linke Schneidplattenseitenfläche erstrecken sich gegenüberliegend zueinander jeweils zumindest abschnittsweise parallel zur Schneidplattenmittenlängsebene, weisen also zumindest einen ebenen Seitenflächenabschnitt auf, der die maximale Breite der Schneidplatte definiert, die zumindest so groß ist wie die Schneidbreite der Schneidplatte.

Dem Klemmsitz ist eine untere Klemmbacke und eine gegenüberliegende sowie durch einen Klemmspalt eines Werkzeughalters federnd gelagerte obere Klemmbacke zugeordnet. Die Schneidplatte wird in dem Klemmsitz eingeklemmt, indem die obere Klemmbacke gegen die Schneidplattendachfläche außerhalb der Spanfläche gepresst wird und die Schneidplattenbodenfläche zugleich auf der unteren Klemmbacke aufliegt. Der unteren und oberen Klemmbacke ist eine gemeinsame Backenmittenlängsebene zuordenbar, zu der die Schneidplattenmittenlängsebene parallel fluchtend ausgerichtet ist, wenn sie in dem Klemmsitz bestimmungsgemäß zum üblicherweise Stechen und/oder Abstechen eingeklemmt ist.

Die untere Klemmbacke ist der Aufstecknut korrespondierend ausgeformt und lässt sich so durch das axial offene Aufstecknutende bezüglich der Nutmittenlängsachse axial in den Grundkörper einstecken, wodurch der Grundkörper entsprechend aufsteckbar ausgebildet ist. Ist die untere Klemmbacke so in den Grundkörper eingesteckt, ist die Backenmittenlängsebene parallel fluchtend zur Nutmittenlängsebene ausgerichtet und parallel zur Seitenführungsebene erstreckt und der Klemmsitz ist mit dem Einführkorridor verbunden.

Indem die Korridorbodenfläche ausgehend von dem Aufstecknutende durch die Aufstecknut unterbrochen ist, liegt die in die Aufstecknut eingesteckte untere Klemmbacke aufseiten der Korridorbodenfläche offen, sodass die Schneidplattenbodenfläche auf die untere Klemmbacke parallel entlang der Nutmittenlängsachse geschoben werden kann.

Wenn die Korridorbodenfläche im Bereich der Aufstecknut parallel zur Nutmittenlängsachse erstreckt ist, wird die Aufstecknut bezüglich der Nutmittenlängsachse seitlich flankiert, sodass die Schneidplattenmittenlängsachse beim Schieben der Schneidplatte im Bereich der Aufstecknut an der Nutmittenlängsachse parallel ausgerichtet wird und entsprechend axial ausgerichtet in den Klemmsitz eingeführt werden kann, insbesondere wenn die Aufstecknut länger ist als der Bereich, der seitens der unteren Klemmbacke in die Aufstecknut eingesteckt ist.

Wenn die Korridorbodenfläche gegenüberliegend zum Aufstecknutende parallel zur Nutmittenlängsachse an die Bodenaufstecknut heranreichend erstreckt ist, wird die Schneidplattenmittenlängsachse beim Schieben der Schneidplatte auf die Aufstecknut bereits vorher an der Nutmittenlängsachse parallel ausgerichtet, insbesondere also, wenn die Korridorbodenfläche länger als die Aufstecknut ist.

Wenn die Korridorbodenfläche im Bereich der Aufstecknut parallel zur Nutmittenlängsachse erstreckt und gegenüberliegend zum Aufstecknutende parallel zur Nutmittenlängsachse an die Aufstecknut heranreichend erstreckt ist, wird die Schneidplattenmittenlängsachse im Bereich der Aufstecknut und bereits bevor die Schneidplatte die Aufstecknut erreicht, parallel an der Nutmittenlängsachse und damit an der Backenmittenlängsachse parallel ausgerichtet.

Die Korridorbodenfläche kann eben ausgeformt sein, also parallel zu einer durch die Nutmittenlängsachse und Nutquerachse aufgespannten Nutquerebene erstreckt sein, und so als zumindest ein, vorzugsweise zwei ebene Seitenstreifen entlang der Aufstecknut diese seitlich flankierend erstreckt sein und/oder als ebener Mittelstreifen an die Aufstecknut heranreichen und so mit der Aufstecknut gegenüberliegend zum Aufstecknutende verbunden sein.

Die Korridorbodenfläche kann in Blickrichtung entlang der Nutmittenlängsachse V-förmig eingewölbt oder V-förmig ausgewölbt sein und ist so an eine korrespondierende V-förmige Kontur der Schneidplattenbodenfläche angepasst.

Indem die Korridorseitenfläche durch die Seitenführungsebene tangierend begrenzt ist, wird die jeweils entlang der Seitenführungsebene geführte rechte Schneidplattenseitenfläche beziehungsweise linke Schneidplattenseitenfläche im Bereich ihres jeweils ebenen Seitenflächenabschnitts parallel fluchtend zur Seitenführungsebene und damit parallel zur Nutmittenlängsebene ausgerichtet, sodass die Schneidplatte dadurch parallel fluchtend bezüglich der Backenmittenlängsebene in den Klemmsitz eingeschoben werden kann, wenn die untere Klemmbacke in die Aufstecknut eingesteckt ist, ohne dass es einer manuellen Nachjustierung bedarf.

Die Korridorseitenfläche kann eben ausgeformt sein und ist dann parallel fluchtend mit der Seitenführungsebene erstreckt. Denkbar und auch möglich ist es aber auch, dass der Seitenführungsbereich eine Noppenstruktur und/oder Rippenstruktur aufweist, bei der entsprechende Noppenhochpunkte und/oder Noppenplateaus beziehungsweise Rippengrate die Seitenführungsebene tangieren, sie aber nicht durchstoßen.

Durch die Nutbreite der Aufstecknut im Bereich von 0,1 mm bis 15 mm ist der Grundkörper zum Aufstecken auf entsprechend schmale untere Klemmbacken und damit zum Einführen entsprechend schmaler Schneidplatten in einen entsprechend schmalen Klemmsitz geeignet.

Gemäß einer vorteilhaften Weiterbildung ist der Einführkorridor gegenüberliegend von der Korridorseitenfläche zumindest abschnittsweise offen. Dadurch lässt sich die Schneidplatte auf der entsprechenden offenliegenden rechten oder linken Schneidplattenseitenfläche manuell führen und die gegenüberliegende Schneidplattenseitenfläche leicht gegen die Korridorseitenfläche pressen und entlang der Nutmittenlängsachse in Richtung des Aufstecknutendes schieben.

Gemäß einer vorteilhaften Weiterbildung liegt die Nutbreite der Aufstecknut im Bereich von 0,2 mm bis 1,1 mm. Durch die Nutbreite der Aufstecknut im Bereich von 0,2 mm bis 1,1 mm ist der Grundkörper aufseiten der Korridorbodenfläche zum Aufstecken auf entsprechend schmalere untere Klemmbacken und damit zum Einführen entsprechend schmaler Schneidplatten in einen entsprechend schmaleren Klemmsitz geeignet.

Gemäß einer vorteilhaften Weiterbildung weist der Einführkorridor aufseiten der Korridorbodenfläche eine Korridordachfläche auf, die entlang der Nutmittentiefachse gegenüberliegend zur Korridorbodenfläche angeordnet und der Korridorbodenfläche folgend erstreckt ist. Die Korridordachfläche übernimmt bezüglich der Schneidplattendachfläche eine zur Korridorbodenfläche bezüglich der Schneidplattenbodenfläche analoge Führungsfunktion, jedoch üblicherweise unter einem bezüglich der Nutmittentiefachse bemessenen Spiel.

Gemäß einer vorteilhaften Weiterbildung weist der Grundkörper aufseiten der Korridordachfläche eine weitere Aufstecknut auf, die mittig parallel entlang der Nutmittenlängsachse in die Länge, mittig parallel entlang der Nutmittentiefachse in die Tiefe und entlang der Nutquerachse in die Breite erstreckt ist, wobei die weitere Aufstecknut aufseiten des axial offenen Aufstecknutendes ein bezüglich der Nutmittenlängsachse axial offenes weiteres Aufstecknutende aufweist, wobei die Korridordachfläche ausgehend von dem axial offenen weiteren Aufstecknutende durch die weitere Aufstecknut unterbrochen ist. Die weitere Aufstecknut übernimmt eine zur Aufstecknut analoge Funktion, indem die obere Klemmbacke in die weitere Aufstecknut einsteckbar ist.

Gemäß einer vorteilhaften Weiterbildung weist der Einführkorridor eine weitere Korridorbodenfläche und/oder eine weitere Korridordachfläche auf, wobei die weitere Korridorbodenfläche beziehungsweise weitere Korridordachfläche konvex verrundet oder gegenüber der Nutmittenlängsachse angewinkelt erstreckt ist, wobei der Einführkorridor beginnend gegenüberliegend von dem Aufstecknutende und fortschreitend entlang der Nutmittenlängsachse durch die weitere Korridorbodenfläche beziehungsweise weitere Korridordachfläche bezüglich der Nutmittentiefachse verjüngt ist und so in den Bereich der Korridorbodenfläche übergeht. Der Vorteil dieser Weiterbildung liegt darin, dass die Schneidplatte bezüglich der Nutmittenlängsachse auch angewinkelt in den Einführkorridor gegenüber dem Aufstecknutende eingeführt werden kann, also unter einer entsprechenden Schrägstellung.

Gemäß einer vorteilhaften Weiterbildung ist die Korridorbodenfläche in Blickrichtung entlang der Nutmittenlängsachse V-förmig eingewölbt oder V-förmig ausgewölbt ausgeformt. Der Vorteil dieser Weiterbildung liegt darin, dass das so V-förmige Profil der Korridorbodenfläche für eine bessere Führung und Stabilisierung der Schneidplatte mit einer korrespondierenden V-förmig ein- beziehungsweise ausgewölbten Schneidplattenbodenfläche sorgt.

Gemäß einer vorteilhaften Weiterbildung ist der Grundkörper monolithisch ausgebildet. Der Vorteil dieser Weiterbildung liegt darin, dass der monolithische Grundkörper eine robuste und langlebige Konstruktion bietet, die weniger anfällig für Verschleiß und Beschädigungen ist und die Herstellung und Montage der Schneidplatteneinführvorrichtung vereinfacht.

Gemäß einer vorteilhaften Weiterbildung weist die Schneidplatteneinführvorrichtung eine Haubenstruktur, Stiftstruktur und/oder Spannklemmenstruktur aufseiten der Aufstecknutendes auf, wobei die Haubenstruktur in Blickrichtung entlang der Nutmittenlängsachse und auf das Aufstecknutende axial offen ist. Durch die Haubenstruktur, Stiftstruktur beziehungsweise Spannklemmenstruktur kann die Schneidplatteneinführvorrichtung jeweils auf den Werkzeughalter auch außerhalb des Bereiches der unteren Klemmbacke aufsteckt werden, so dass die Schneidplatteneinführvorrichtung so zusätzlich abgestützt wird.

Gemäß einer vorteilhaften Weiterbildung weist die Haubenstruktur eine sich bezüglich der Nutmittenlängsachse umfänglich erstreckende Haubenwandung auf, die einen axial offenen Haubeninnenbereich zumindest abschnittsweise umfänglich umgibt. Die Haubenwandung ermöglicht nach dieser Weiterbildung ein stabiles Aufstecken der Schneidplattenvorrichtung außerhalb des Klemmsitzes auf den Werkzeughalter.

Nach einer weiteren vorteilhaften Weiterbildung der Schneidplatteneinführvorrichtung ist die Schneidplatteneinführvorrichtung aus einem gegenüber einem Hartmetall weicheren Material hergestellt ist. Dadurch wird die Schneidplatte, wenn sie aus einem Hartmetall (englisch "cemented carbide") hergestellt ist, entlang der Korridorbodenfläche und der Korridorseitenfläche besonders schonend geführt.

Die Aufgabe wird durch ein Werkzeughalterset nach Anspruch 11 gelöst.

Das Werkzeughalterset umfasst die Schneidplatteneinführvorrichtung nach einem der Ansprüche 1 bis 10 und einen Werkzeughalter mit einem Klemmsitz zur klemmenden Halterung von einer Schneidplatte, wobei dem Klemmsitz eine untere Klemmbacke und eine gegenüber dieser durch einen Klemmspalt des Werkzeughalters federnd gelagerte obere Klemmbacke zugeordnet sind, wobei die Aufstecknut einem vorderen Bereich der unteren Klemmbacke korrespondierend ausgeformt ist. Die Schneidplatteneinführvorrichtung ist folglich an den Werkzeughalter angepasst, so dass die bezüglich der Schneidplatteneinführvorrichtung beschriebenen Merkmale und Vorteile direkt für den Werkzeughalter realisiert werden.

Gemäß einer vorteilhaften Weiterbildung des Werkzeughaltersets weist der Grundkörper die in Anspruch 9 oder 10 definierte Haubenstruktur und/oder die in Anspruch 9 definierte Stiftstruktur und/oder die in Anspruch 9 definierte Spannklemmenstruktur aufseiten des Aufstecknutendes auf und ist so zum Aufsetzen des Grundkörpers auf den Werkzeughalter außerhalb des Klemmsitzes ausgebildet. Der Grundkörper ist folglich zum reversibel lösbaren Aufsetzen auf den Werkzeughalter außerhalb des Klemmsitzes ausgebildet.

Die Aufgabe wird durch ein Schneidplattenset nach Anspruch 13 gelöst. Das Schneidplattenset umfasst eine Schneidplatteneinführvorrichtung nach einem der Ansprüche 1 bis 10 und eine Schneidplatte, wobei die Schneidplatte eine Schneidplattendachfläche mit einer Hauptschneide, eine daran angeschlossene Spanfläche und eine gegenüberliegende Schneidplattenbodenfläche aufweist, wobei die Schneidplattenbodenfläche mittig parallel entlang einer Schneidplattenmittenlängsachse erstreckt ist, wobei die Schneidplatte eine mit der Hauptschneide verbundene vordere Schneidplattenstirnfläche und eine gegenüberliegende hintere Schneidplattenstirnfläche aufweist, wobei die Schneidplatte eine mit der vorderen Schneidplattenstirnfläche und der hinteren Schneidplattenstirnfläche verbundene rechte Schneidplattenseitenfläche und gegenüberliegend eine linke Schneidplattenseitenfläche aufweist, wobei die rechte Schneidplattenseitenfläche und die linke Schneidplattenseitenfläche gegenüberliegend zueinander jeweils einen ebenen Seitenflächenabschnitt aufweisen, der unter einer Führung entlang der Korridorseitenfläche parallel zur Nutmittenlängsebene ausgerichtet ist, wobei die Schneidplattenmittenlängsachse unter einer Führung der Schneidplattenbodenfläche entlang der Korridorbodenfläche parallel zur Nutmittenlängsachse ausgerichtet ist, wobei die Schneidplatte im Bereich der ebenen Seitenflächenabschnitte eine maximale Schneidplattenbreite der Schneidplatte definiert, wobei die maximale Schneidplattenbreite betragsmäßig zumindest so groß ist wie eine Schneidbreite der Schneidplatte, wobei die Seitenführungsebene entlang der Nutquerachse bemessen unter einem Abstand zur Nutmittenlängsebene beabstandet ist, der betragsmäßig halb so groß ist wie die maximale Schneidplattenbreite. Die Schneidplatte ist folglich bezüglich ihrer Abmessung an die Abmessungen des Einführkorridors bezüglich der Seitenführungsebene und der Nutmittenlängsachsebene angepasst und kann so fluchtend zur Nutmittenlängsebene entlang der Korridorbodenfläche unter seitlicher Führung an der Korridorseitenfläche verschoben werden. Die Schneidbreite ist durch die Quererstreckung der Hauptschneide definiert.

Die Aufgabe wird durch ein Kombinationsset nach Anspruch 14 gelöst. Das Kombinationsset umfasst eine Schneidplatteneinführvorrichtung nach einem der Ansprüche 1 bis 10, den in Anspruch 11 oder 12 definierten Werkzeughalter und die in Anspruch 13 definierte Schneidplatte, wobei der Klemmsitz zur klemmenden Halterung dieser Schneidplatte ausgeformt ist und die Schneidplatteneinführvorrichtung zum Aufstecken auf die untere Klemmbacke des Klemmsitzes und zur Führung der Schneidplatte ausgeformt sind. Bei dem Kombinationsset sind folglich die Schneidplatteneinführvorrichtung, die Schneidplatte und der Werkzeughalter einander angepasst, sodass die Schneidplatteneinführvorrichtung im Bereich der Aufstecknut auf die untere Klemmbacke aufgesteckt werden kann und die Schneidplatte im Einführkorridor bezüglich der Seitenführungsebene und der Nutmittenlängsebene fluchtend zur Nutmittenlängsebene entlang der Korridorbodenfläche unter seitlicher Führung an der Korridorseitenfläche verschoben werden kann, wodurch sie zur Nutmittenlängsachse parallel fluchtend ausgerichtet wird und so ausgerichtet präzise in den Klemmsitz eingeführt werden kann.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung einer Schneidplatteneinführvorrichtung nach einer ersten Ausführungsform in einer perspektivischen Seitenansicht von links;
- Fig. 2:: eine schematische Darstellung der Schneidplatteneinführvorrichtung nach der ersten Ausführungsform in einer perspektivischen Seitenansicht von rechts;
- Fig. 3:: eine schematische Darstellung der Schneidplatteneinführvorrichtung nach der ersten Ausführungsform in einer Vorderansicht;
- Fig. 4a:: eine schematische Darstellung der Schneidplatteneinführvorrichtung nach der ersten Ausführungsform in einer Rückansicht;
- Fig. 4b:: einen vergrößerten Bereich aus Fig. 4a;
- Fig. 5:: eine schematische Darstellung der Schneidplatteneinführvorrichtung nach der ersten Ausführungsform in einer Untersicht;
- Fig. 6:: eine schematische Darstellung der Schneidplatteneinführvorrichtung nach der ersten Ausführungsform in einer Draufsicht;
- Fig. 7:: eine schematische Darstellung der Schneidplatteneinführvorrichtung nach der ersten Ausführungsform in einer Seitenansicht von links;
- Fig. 8a:: eine schematische Darstellung der Schneidplatteneinführvorrichtung nach der ersten Ausführungsform in einem Schnitt gemäß der Schnittlinie A-A aus Fig. 7;
- Fig. 8b:: einen vergrößerten Bereich aus Fig. 4a;
- Fig. 9:: eine schematische Darstellung der Schneidplatteneinführvorrichtung nach der ersten Ausführungsform in einem Schnitt gemäß der Schnittlinie B-B aus Fig. 7;
- Fig. 10a:: eine schematische Darstellung eines vorderen Bereichs eines Werkzeughalters in einer Seitenansicht von links;
- Fig. 10b:: eine schematische Darstellung eines vorderen Bereichs einer Werkzeughalters gemäß Fig. 10a in einer Draufsicht;
- Fig. 11:: eine schematische Darstellung eines Werkzeughaltersets nach einer ersten Ausführungsform in einer perspektivischen Seitenansicht von links;
- Fig. 12:: eine schematische Darstellung des Werkzeughaltersets nach der ersten Ausführungsform in einer perspektivischen Seitenansicht von rechts;
- Fig. 13:: eine schematische Darstellung des Werkzeughaltersets nach der ersten Ausführungsform in einer Draufsicht;
- Fig. 14:: eine schematische Darstellung des Werkzeughaltersets nach der ersten Ausführungsform in einem Schnitt gemäß der Schnittlinie E-E aus Fig. 13;
- Fig. 15:: eine schematische Darstellung des Werkzeughaltersets nach der ersten Ausführungsform in einer Seitenansicht von links;
- Fig. 16:: eine schematische Darstellung des Werkzeughaltersets nach der ersten Ausführungsform in einem Schnitt gemäß der Schnittlinie C-C aus Fig. 15;
- Fig. 17:: eine schematische Darstellung des Werkzeughaltersets nach der ersten Ausführungsform in einem Schnitt gemäß der Schnittlinie D-D aus Fig. 15;
- Fig. 18:: eine schematische Darstellung einer Schneidplatte in einer perspektivischen Ansicht von links;
- Fig. 19:: eine schematische Darstellung der Schneidplatte gemäß Fig. 18 in einer Seitenansicht von links;
- Fig. 20:: eine schematische Darstellung der Schneidplatte gemäß Fig. 18 in einer Draufsicht;
- Fig. 21:: eine schematische Darstellung eines Schneidplattensets und eines Kombinationssets mit jeweils der Schneidplatte gemäß Fig. 18 in einer Seitenansicht von links;
- Fig. 22:: eine schematische Darstellung des Schneidplattensets und des Kombinationssets in einer Seitenansicht von links mit der gegenüber Fig. 21 weiter verschobenen Schneidplatte;
- Fig. 23:: eine schematische Darstellung des Schneidplattensets und des Kombinationssets in einer Seitenansicht von links mit der gegenüber Fig. 22 weiter verschobenen Schneidplatte;
- Fig. 24:: eine schematische Darstellung einer Schneidplatteneinführvorrichtung nach einer zweiten Ausführungsform in einer perspektivischen Ansicht von links.

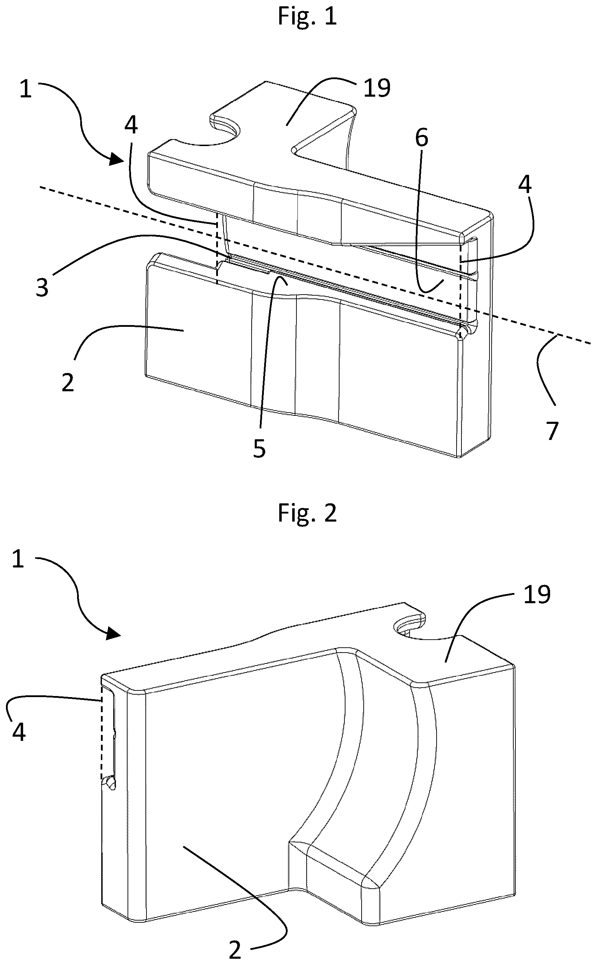

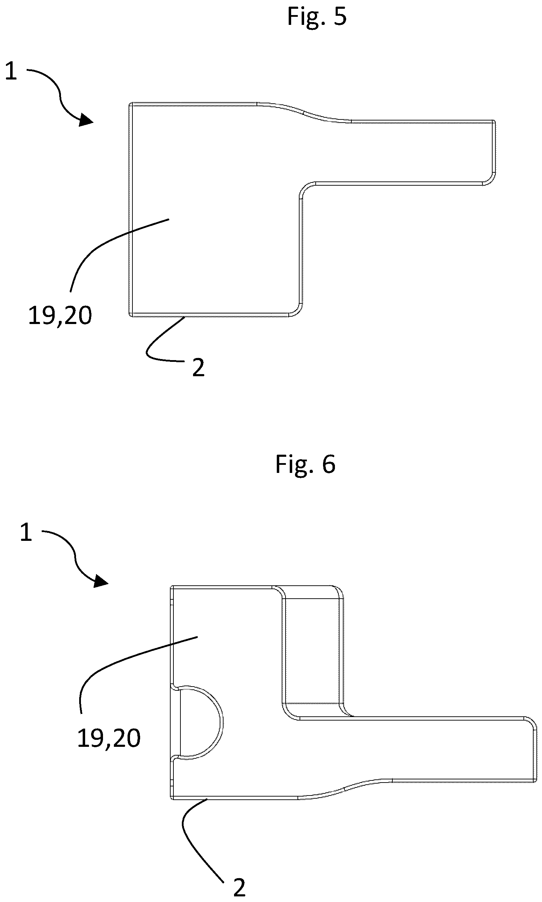

Die Fig. 1 bis Fig. 9 zeigen in verschiedenen Ansichten eine Darstellung einer Schneidplatteneinführvorrichtung 1, bei der es sich um eine Schneidplatteneinführvorrichtung nach einer ersten Ausführungsform handelt. Die Schneidplatteneinführvorrichtung 1 wird im Folgenden unter Bezugnahme auf die Fig. 1 bis 9 beschrieben.

Die Schneidplatteneinführvorrichtung 1 umfasst einen monolithisch ausgebildeten Grundkörper 2 mit einer Aufstecknut 3 und einem Einführkorridor 4. Der Einführkorridor 4 weist eine Korridorbodenfläche 5 und eine Korridorseitenfläche 6 auf, wobei der Einführkorridor 4 gegenüberliegend von der Korridorseitenfläche 6 durchgehend offen und bezüglich der Nutmittenlängsachse 7 axial beidseits offen ist, wie Fig. 1 zeigt.

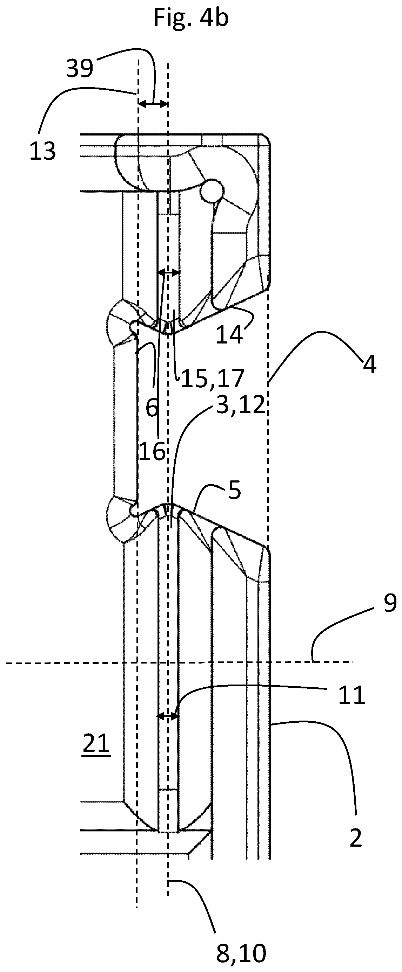

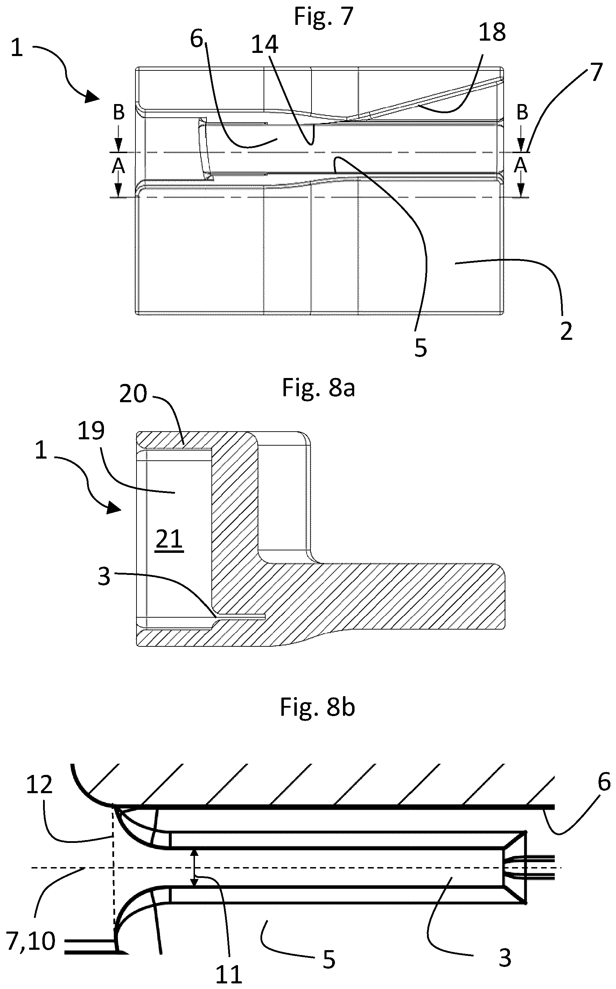

Die Aufstecknut 3 ist mittig parallel entlang einer Nutmittenlängsachse 7 in die Länge erstreckt, wie Fig. 8b zeigt. Die Aufstecknut 3 ist ferner mittig parallel entlang einer senkrecht zur Nutmittenlängsachse 7 verlaufenden Nutmittentiefachse 8 in die Tiefe erstreckt, wie Fig. 4b zeigt. Die Aufstecknut 3 ist ferner parallel entlang einer senkrecht zur Nutmittenlängsachse 7 und Nutmittentiefachse 8 verlaufenden Nutquerachse 9 in die Breite erstreckt, wie Fig. 4b zeigt. Durch die Nutmittenlängsachse 7 und die Nutmittentiefachse 8 ist eine Nutmittenlängsebene 10 aufgespannt, wie Fig. 4b und Fig. 8b zeigen. Die Aufstecknut 3 weist eine Nutbreite 11 auf, wie Fig. 4b und Fig. 8b zeigen. Die Nutbreite 11 beträgt exemplarisch 0,4 mm, was im Bereich von 0,1 mm bis 15 mm liegt. Die Aufstecknut 3 weist ein bezüglich der Nutmittenlängsachse 7 axial offenes Aufstecknutende 12 auf, wie Fig. 4b und Fig. 8b zeigen; in Fig. 8b ist das Aufstecknutende 12 durch eine gestrichelte Linie markiert.

Die Korridorbodenfläche 5 ist ausgehend von dem Aufstecknutende 12 durch die Aufstecknut 3 unterbrochen, wie Fig. 8b zeigt. Die Korridorbodenfläche 5 im Bereich der Aufstecknut 3 erstreckt sich parallel zur Nutmittenlängsachse 7 und gegenüberliegend zum Aufstecknutende 12 an die Aufstecknut 3 parallel zur Nutmittenlängsachse 7 heranreichend. Die Aufstecknut 3 ist also insgesamt parallel zur Nutmittenlängsachse 7 erstreckt. Indem die Korridorbodenfläche 5 im Bereich der Aufstecknut 3 parallel zur Nutmittenlängsachse 7 erstreckt ist, wird die Aufstecknut 3 durch die so erstreckte Korridorbodenfläche 5 seitlich flankiert, einseitig oder wie bei der Schneidplatteneinführvorrichtung 1 beidseits der Nutmittenlängsachse 7, indem die Korridorbodenfläche 5 ein in Blickrichtung entlang der Nutmittenlängsachse 7 V-förmig ausgewölbtes Profil aufweist, das im Bereich der entsprechenden Spitze des "Vs" durch die Aufstecknut 3 parallel entlang der Nutmittenlängsachse 7 unterbrochen ist, sodass die Korridorbodenfläche 5 den Flanken des "Vs" folgend in Blickrichtung entlang der Nutmittenlängsachse 7 beidseits von der Nutmittenlängsachse 7 abfällt.

Die Korridorbodenfläche 5 ist außerhalb des Bereichs der Aufstecknut 3 gegenüberliegend zum Aufstecknutende 12 an die Aufstecknut 3 parallel zur Nutmittenlängsachse 7 heranreichend erstreckt und so über die Breite 11 erstreckt gegenüberliegend zum Aufstecknutende 12 mit der Aufstecknut 3 verbunden, wie Fig. 1 und Fig. 4b in Zusammenschau zeigen.

Die Korridorseitenfläche 6 ist durch eine Seitenführungsebene 13 tangierend begrenzt und in Blickrichtung entlang der Nutmittenlängsachse 7 neben und aufseiten der Aufstecknut 3 erstreckt, wie Fig. 4b zeigt. Die Seitenführungsebene 13 ist parallel entlang der Nutmittenlängsebene 10 erstreckt, wie Fig. 4b zeigt.

Der Einführkorridor 4 weist aufseiten der Korridorbodenfläche 5 eine Korridordachfläche 14 auf, die entlang der Nutmittentiefachse 8 gegenüberliegend zur Korridorbodenfläche 5 angeordnet und parallel entlang der Nutmittenlängsachse 7 sowie der Korridorbodenfläche 5 folgend erstreckt ist, wie Fig. 4b in Zusammenschau mit Fig. 7 zeigt.

Der Grundkörper 2 weist aufseiten der Korridordachfläche 14 eine weitere Aufstecknut 15 auf, die mittig parallel entlang der Nutmittenlängsachse 7 in die Länge, mittig parallel entlang der Nutmittentiefachse 8 in die Tiefe und entlang der Nutquerachse 9 in die Breite erstreckt ist, wie Fig. 4b zeigt. Die weitere Aufstecknut 15 weist eine weitere Breite 16 auf. Die weitere Breite 16 entspricht betragsmäßig der Breite 11.

Die weitere Aufstecknut 15 weist aufseiten des axial offenen Aufstecknutendes 12 ein bezüglich der Nutmittenlängsachse 7 axial offenes weiteres Aufstecknutende 17 auf, wie Fig. 4b zeigt. Die Korridordachfläche 14 ist ausgehend von dem axial offenen weiteren Aufstecknutende 17 durch die weitere Aufstecknut 15 analog zur Korridorbodenfläche 5 unterbrochen.

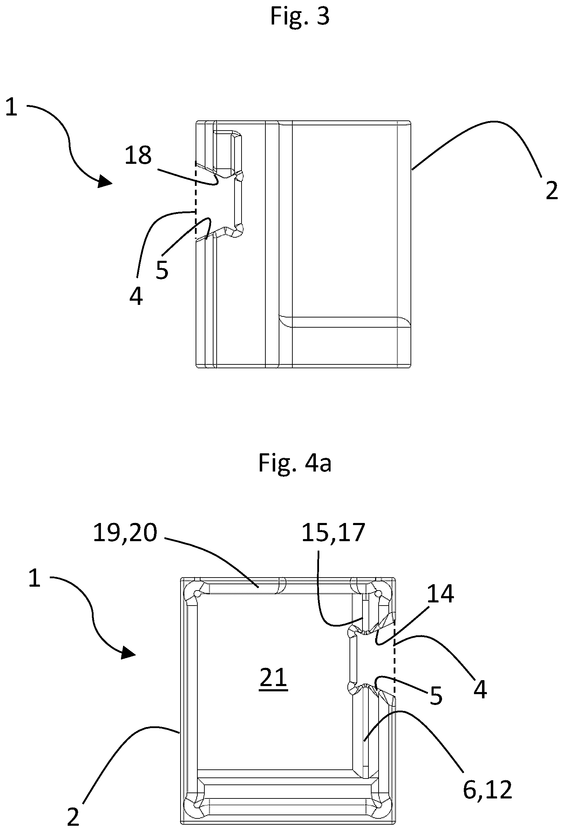

Der Einführkorridor 4 weist eine weitere Korridordachfläche 18 auf, wie Fig. 3 und Fig. 7 zeigen. Die weitere Korridordachfläche 18 ist gegenüber der Nutmittenlängsachse 7 angewinkelt erstreckt, wie Fig. 7 zeigt. Der Einführkorridor 4 ist durch die weitere Korridordachfläche 18 bezüglich eines zunehmenden Eintritts in den Einführkorridor 4 beginnend gegenüberliegend von dem Aufstecknutende 12 und fortschreitend entlang der Nutmittenlängsachse 7 bezüglich der Nutmittentiefachse 8 verjüngt und geht so in den Bereich der Korridorbodenfläche 5 über, wie Fig. 7 zeigt.

Der Grundkörper 2 weist eine Haubenstruktur 19 auf, wie Fig. 1 und Fig. 2 zeigen. Die Haubenstruktur 19 ist in Blickrichtung entlang der Nutmittenlängsachse 7 und auf das Aufstecknutende 12 axial offen, wie Fig. 4a in Zusammenschau mit Fig. 4b zeigt. Die Haubenstruktur 19 weist eine sich bezüglich der Nutmittenlängsachse 7 umfänglich erstreckende Haubenwandung 20 auf, wie Fig. 4a zeigt. Die Haubenwandung 20 umgibt einen axial offenen Haubeninnenbereich 21 abschnittsweise umfänglich, wie Fig. 4a zeigt; dieser wird außenumfangseitig durch den Einführkorridor 4 unterbrochen.

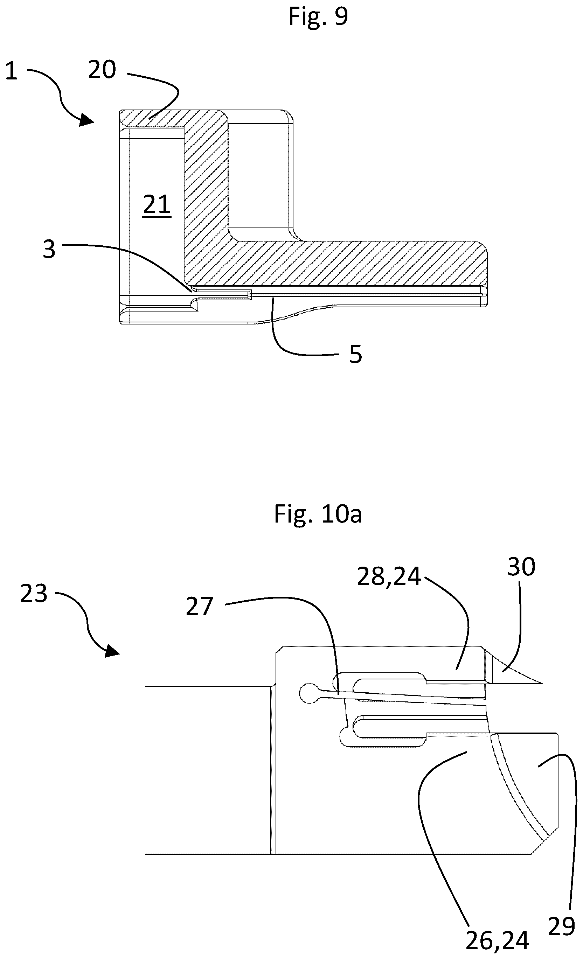

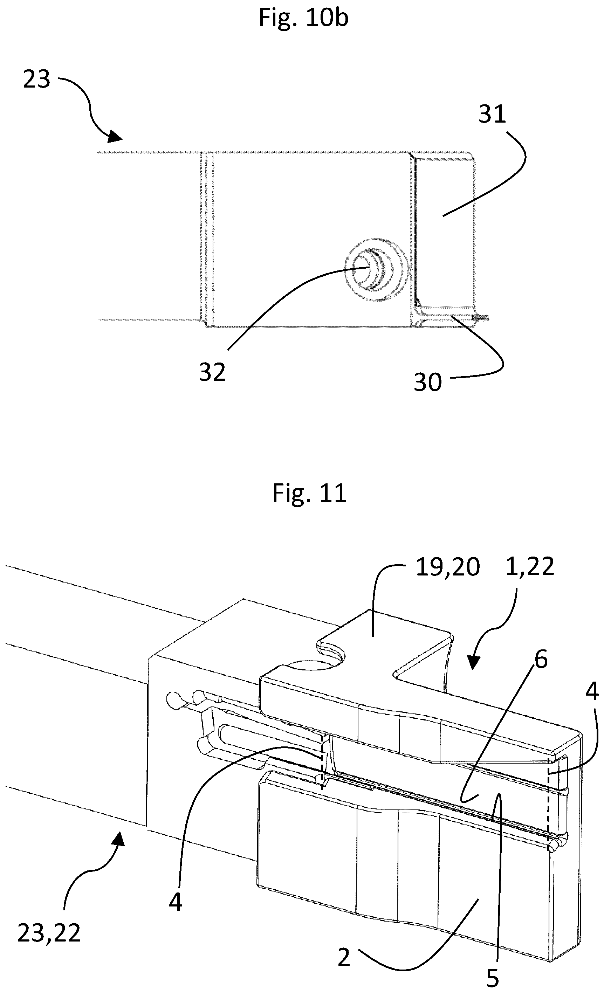

Die Fig. 11 bis Fig. 17 zeigen in verschiedenen Ansichten eine Darstellung eines Werkzeughaltersets 22. Das Werkzeughalterset 22 umfasst die in den Fig. 1 bis Fig. 9 gezeigte Schneidplatteneinführvorrichtung 1. Das Werkzeughalterset 22 umfasst ferner einen Werkzeughalter 23, der in Fig. 10a und Fig. 10b vom Werkzeughalterset 22 isoliert und in den Fig. 10a bis Fig. 17 jeweils in einem vorderen Bereich dargestellt ist.

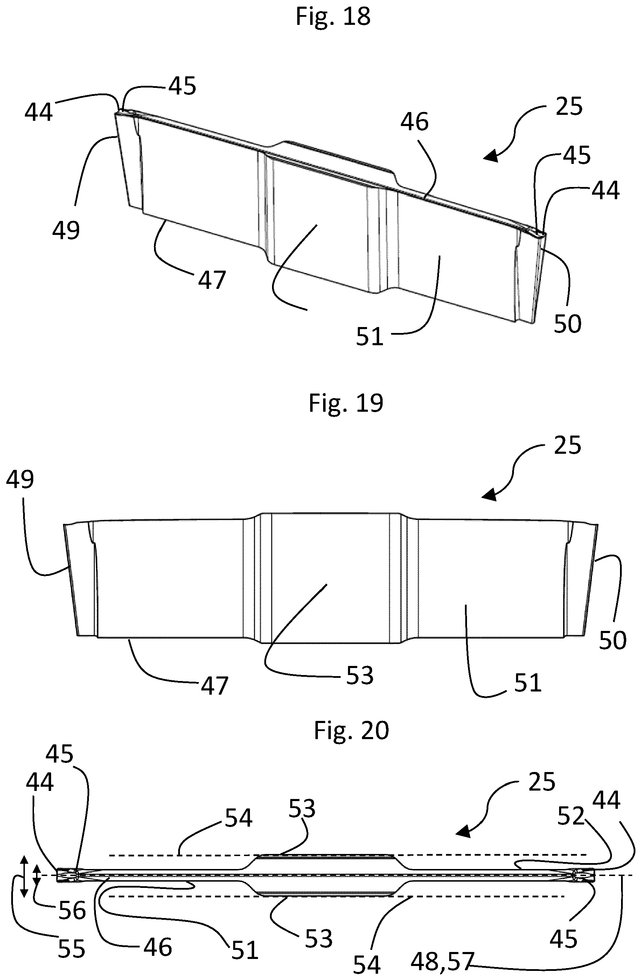

Der Werkzeughalter 23 weist einen Klemmsitz 24 zur klemmenden Halterung einer in Fig. 19 bis Fig. 20 isoliert dargestellten Schneidplatte 25 auf. Dem Klemmsitz 24 ist eine untere Klemmbacke 26 und eine gegenüber der unteren Klemmbacke 26 durch einen Klemmspalt 27 des Werkzeughalters 23 federnd gelagerte obere Klemmbacke 28 zugeordnet. Die untere Klemmbacke 26 weist einen vorderen Bereich 29 auf, wie Fig. 10a zeigt. Die obere Klemmbacke 28 weist einen vorderen Bereich 30 auf, wie Fig. 10a zeigt. Der Werkzeughalter 23 weist eine konkave gekrümmte Stirnfläche 31 auf, die in Fig. 10b in einer Draufsicht dargestellt ist. Die Stirnfläche 31 ist seitlich versetzt zum Klemmsitz 24 angeordnet. Fig. 10b zeigt, dass der Werkzeughalter 23 eine den Klemmspalt 27 durchdringende Gewindebohrung 32 zum Festschrauben des Klemmspalts 27 mit einer nicht dargestellten Schraube aufweist.

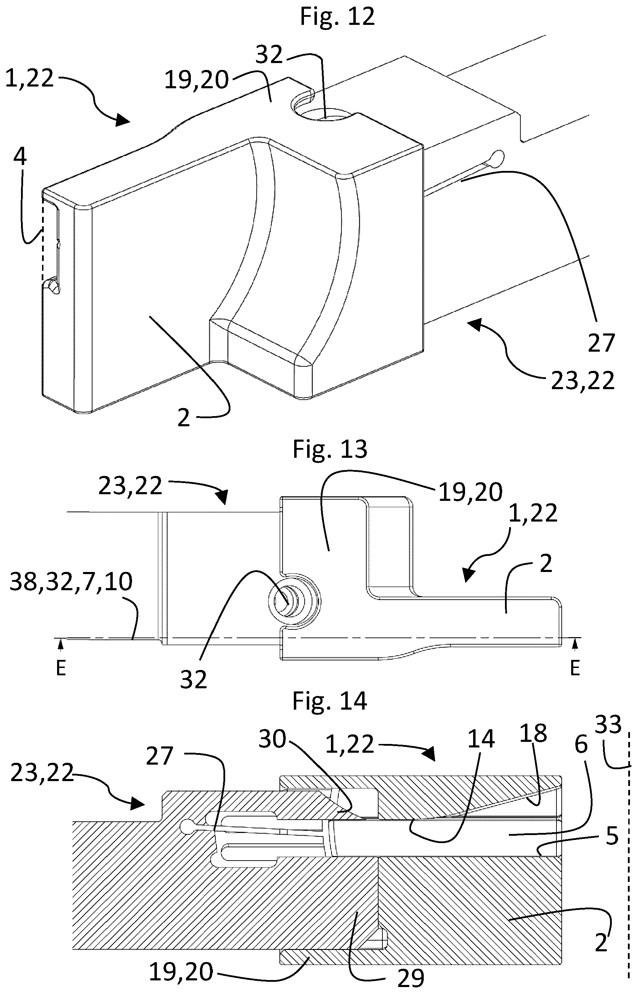

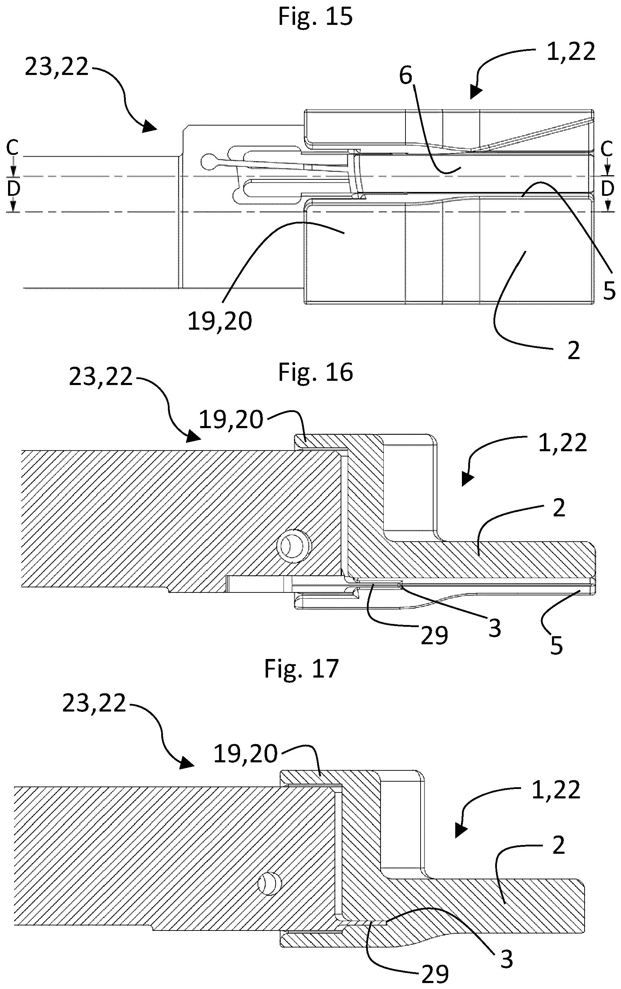

Die Aufstecknut 3 ist dem vorderen Bereich 29 korrespondierend ausgeformt, wie Fig. 16 und Fig. 17 gemäß den in Fig. 15 gezeigten Schnittlinien C und D zeigen, sodass der vordere Bereich 29 und damit die untere Klemmbacke 26 in die Aufstecknut 3 eingesteckt beziehungsweise der Grundkörper 2 auf die untere Klemmbacke 26 im Bereich des Einführkorridors 4 aufseiten der Korridorbodenfläche 5 aufgesteckt werden kann und, gemäß Fig. 11 bis Fig. 17, auch ist. In analoger Weise ist die weitere Aufstecknut 17 dem vorderen Bereich 30 korrespondierend ausgeformt, sodass der vordere Bereich 30 und damit die obere Klemmbacke 28 in die weitere Aufstecknut 17 eingesteckt beziehungsweise der Grundkörper 2 auf die obere Klemmbacke 28 im Bereich des Einführkorridors 4 aufseiten der Korridordachfläche 14 aufgesteckt werden kann und, gemäß Fig. 11 bis Fig. 17, auch ist. Im gemäß Fig. 11 bis Fig. 17 aufgesteckten Zustand der Schneidplatteneinführvorrichtung 1 auf den Werkzeughalter 23 ist eine in Fig. 13 dargestellte Backenmittenlängsachse 32, die mit der Schnittlinie E-E zusammenfällt und entlang derer sich die untere Klemmbacke 26 und damit der vordere Bereich 29 und die obere Klemmbacke 28 und damit der vordere Bereich 30 parallel mittig entlang in die Länge erstrecken, parallel fluchtend zur Nutmittenlängsachse 7 ausgerichtet.

Im gemäß Fig. 11 bis Fig. 17 aufgesteckten Zustand der Schneidplatteneinführvorrichtung 1 auf den Werkzeughalter 23 ist eine in Fig. 14 dargestellte Backenmittentiefachse 33, die senkrecht zur Backenmittenlängsachse 32 verläuft und mit der Backenmittenlängsebene 37 eine Backenmittenlängsebene 38 aufspannt, parallel fluchtend zur Nutmittentiefachse 8 aufgespannt; die untere Klemmbacke 26 und damit der vordere Bereich 29 und die obere Klemmbacke 28 und damit der vordere Bereich 30 erstrecken sich parallel mittig entlang der Backenmittentiefachse 33 in die Tiefe. Somit ist auch die Backenmittenlängsebene 38 parallel fluchtend zur Nutmittenlängsebene 10 im aufgesteckten Zustand der Schneidplatteneinführvorrichtung 1 auf den Werkzeughalter 23 ausgerichtet, wie Fig. 13 zeigt; in Fig. 14 ist die Blickrichtung parallel fluchtend zu den entsprechenden Normalenvektoren der Nutmittenlängsebene 10 und Backenmittenlängsebene 38 ausgerichtet.

Somit ist die Backenmittenlängsebene 38 parallel entlang der Seitenführungsebene 13 erstreckt und zur Seitenführungsebene 13 entlang der Nutquerachse bemessen unter einem Abstand 39 beabstandet, den Fig. 4b zeigt.

Indem die Haubenwandung 20 aufseiten des Innenbereichs 21 der Stirnfläche 31 korrespondierend ausgeformt ist, sich parallel entlang der Nutmittenlängsachse 7 von dem Aufstecknutende 12 bezüglich der Nutmittenlängsachse 7 axial weg erstreckt und dabei dem Werkzeughalter 23 korrespondierend bemessen ist, lässt sich die Haubenstruktur 19 und damit der Grundkörper 2 außerhalb des Klemmsitzes 24 formschlüssig auf den Werkzeughalter 23 aufsetzen, sodass der Grundkörper 2 im aufgesteckten Zustand der Schneidplatteneinführvorrichtung 1 auf den Werkzeughalter 23 stabil gehalten ist.

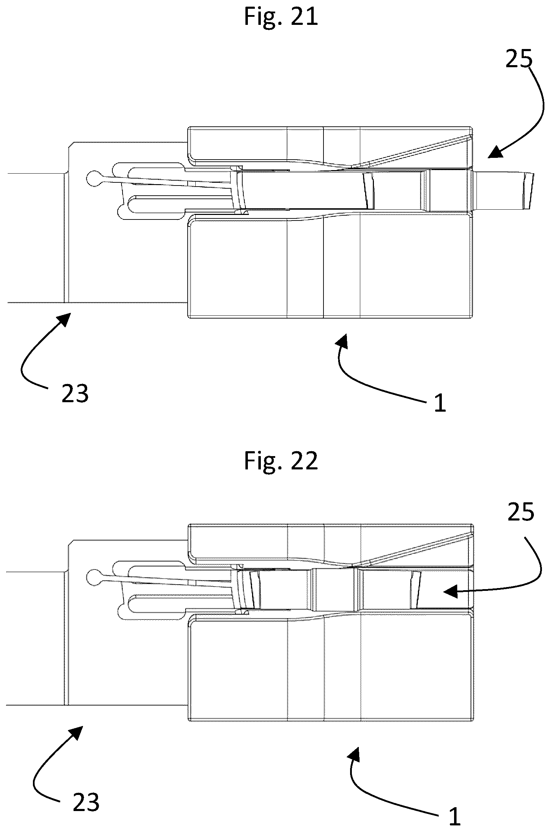

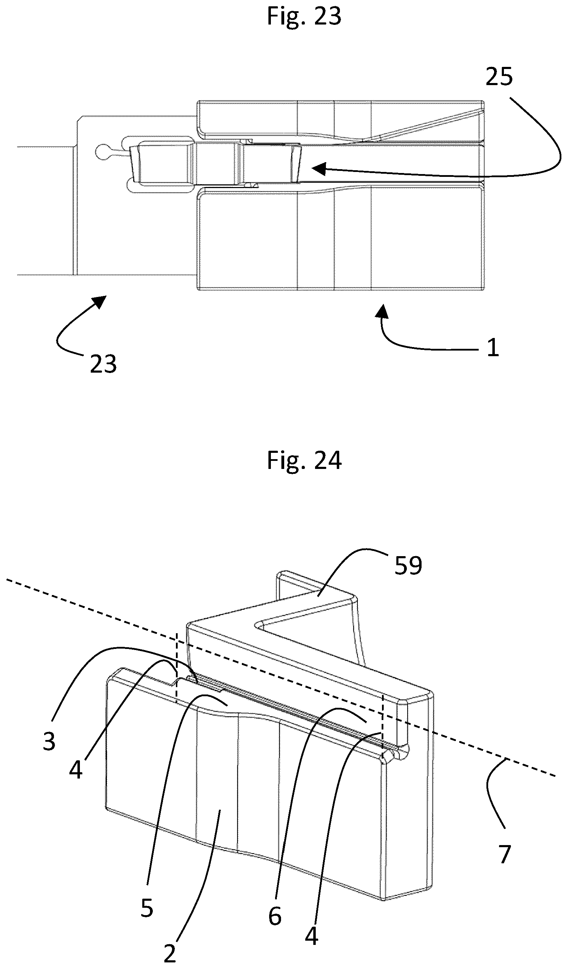

Bevor auf das in Fig. 21 und 23 dargestellte Werkzeughalterset 22 mit der Schneidplatte 25 und dem damit jeweils in Alleinstellung offenbarten Schneidplattenset und Kombinationsset näher eingegangen wird, wird die Schneidplatte 25 unter Bezugnahme auf die Fig. 18 bis Fig. 20 näher beschrieben. Die Schneidplatte 25 weist zwei zueinander gegenüberliegende Hauptschneiden 44 auf. An die Hauptschneiden 44 ist jeweils eine Spanfläche 45 angeschlossen. Durch die Spanflächen 45 ist eine Position einer Schneidplattendachfläche 46 der Schneidplatte 25 definiert, die folglich die Spanflächen 45 mit umfasst. Die Schneidplatte 25 weist ferner gegenüberliegend zur Schneidplattendachfläche 46 eine Schneidplattenbodenfläche 47 auf. Die Schneidplattendachfläche 46 ist mittig parallel entlang einer Schneidplattenmittenlängsachse 48 erstreckt, wie Fig. 20 zeigt. Dementsprechend analog ist auch die Schneidplattenbodenfläche 47 mittig parallel entlang der Schneidplattenmittenlängsachse 48 erstreckt. Die Schneidplatte 25 weist eine mit den Hauptschneiden 44 verbundene vordere Schneidplattenstirnfläche 49 und eine gegenüberliegende hintere Schneidplattenstirnfläche 50 auf. Die Schneidplatte 25 weist ferner eine mit der vorderen Schneidplattenstirnfläche 49 und mit der hinteren Schneidplattenstirnfläche 50 verbundene rechte Schneidplattenseitenfläche 51 und gegenüberliegend eine linke Schneidplattenseitenfläche 52 auf. Die rechte Schneidplattenseitenfläche 51 und die linke Schneidplattenseitenfläche 52 weisen gegenüberliegend zueinander jeweils einen ebenen Seitenflächenabschnitt 53 auf, der jeweils parallel entlang einer Ebene 54 erstreckt ist, wie Fig. 20 zeigt. Unter einer Führung der Seitenflächenabschnitte 53 entlang der Korridorseitenfläche 6 wird der jeweils so in Kontakt mit der Korridorseitenfläche 6 stehende Seitenflächenabschnitt 53 parallel zur Nutmittenlängsebene 10 ausgerichtet und zugleich wird die Schneidplattenmittenlängsachse 48 unter einer Führung der Schneidplattenbodenfläche 47 entlang der Korridorbodenfläche 5 parallel zur Nutmittenlängsachse 7 ausgerichtet. Der Schneidplatte 25 ist eine Schneidplattenmittenlängsebene 54 zugeordnet, wie Fig. 20 zeigt. Wenn die Schneidplatte 25 bestimmungsgemäß zum Einstechen mit einer der Hauptschneiden 44 mittig parallel entlang der Schneidplattenmittenlängsachse 48 in dem Klemmsitz 24 eingeklemmt ist, ist die Schneidplattenmittenlängsebene 54 parallel fluchtend zur Backenmittenlängsebene 38 angeordnet. Die Schneidplatte 25 weist eine in Fig. 20 dargestellte maximale Schneidplattenbreite 55 auf. Wie aus Fig. 20 ersichtlich, ist die Schneidplattenbreite 55 durch die maximalen Seitenflächenabschnitte 53 definiert. Die maximale Schneidplattenbreite 55 ist größer als die den Hauptschneiden 44 zugeordnete Schneidbreite 56, die in Fig. 20 ebenfalls dargestellt ist. Der Schneidplatte 25 ist eine Schneidplattenmittenlängsebene 57 zugeordnet, wie Fig. 20 zeigt, die parallel zu den Ebenen 53 und mittig zwischen den Ebenen 53 erstreckt ist.

Der in Fig. 4b dargestellte Abstand 39 zwischen der Seitenführungsebene 13 und der Nutmittenlängsachse 10 ist halb so groß wie die maximale Schneidplattenbreite 55. Indem einer der Seitenflächenabschnitte 53 die Korridorseitenfläche 6 und die Schneidplattenbodenfläche 47 die Korridorbodenfläche 5 unter einer bezüglich der Nutmittenlängsachse 7 axialen Einführbewegung kontaktieren, wird folglich wegen des Abstands 39 und wegen der durch die Seitenführungsebene 13 tangierend begrenzten Korridorseitenfläche 6 die Schneidplattenmittenlängsebene 57 parallel fluchtend zur Nutmittenlängsebene 10 und damit, im gemäß Fig. 11 bis 17 auf den Werkzeughalter 23 aufgesteckten Zustand der Schneidplatteneinführvorrichtung 1, auch parallel fluchtend zur Backenmittenlängsebene 38 ausgerichtet. Aufgrund der zur Nutmittenlängsachse 7 parallelen Erstreckung der Korridorbodenfläche 5 wird zugleich die Schneidplattenmittenlängsachse 48 an der Nutmittenlängsachse 7 parallel ausgerichtet, sodass die Schneidplatte 25 parallel fluchtend exakt in den Klemmsitz 24 bestimmungsgemäß eingeführt werden kann.

Fig. 21 bis 23 zeigen jeweils in einer zu Fig. 7 analogen Seitenansicht das Werkzeughalterset 22 in dem bezüglich Fig. 11 bis Fig. 17 beschriebenen Zustand, dass die Schneidplatteneinführvorrichtung 1 auf den Werkzeughalter 23 aufgesteckt ist, und zusammen mit der in Fig. 18 bis 20 isoliert dargestellten Schneidplatte 25; die Fig. 21 bis 23 sind im Zusammenhang mit den Fig. 1 bis 20 und deren vorangegangener Beschreibung zu betrachten. Gemäß Fig. 21 ist die Schneidplatte 25 auf dem Weg in den Klemmsitz 24 teilweise in den Einführkorridor 4, gemäß Fig. 22 bereits im Bereich der Korridorbodenfläche 5 und der Korridordachfläche 14 und in Fig. 23 im Klemmsitz 24 eingeführt, wobei sie wie bezüglich Fig. 18 bis Fig. 20 beschrieben in den Klemmsitz 24 unter einer bezüglich der Nutmittenlängsachse 7 axialen Einführbewegung exakt eingeführt wird, wobei die Schneidplatte 25 aufseiten einer der Seitenflächenabschnitte 53 durch die Korridorseitenfläche 6 und die Schneidplattenbodenfläche 47 durch die korrespondierend ausgeformte Korridorbodenfläche 5 geführt wird. Die Schneidplattendachfläche 46 wird durch die Korridordachfläche 14 unter einem bezüglich der Nutmittentiefachse 8 bemessenen axialen Spiel seitlich geführt, um so ein Verklemmen zu vermeiden. Da die weitere Korridordachfläche 18 gegenüber der Nutmittenlängsachse 7 angewinkelt erstreckt ist, kann die Schneidplatte 25 entsprechend angewinkelt in den Einführkorridor 4 eingeführt werden.

An dieser Stelle wird ausdrücklich festgehalten, dass die Fig. 21 bis 23 ein Schneidplattenset in Alleinstellung offenbaren, das die Schneidplatte 25 und die Schneidplatteneinführvorrichtung 1 umfasst. An dieser Stelle wird ferner ausdrücklich festgehalten, dass die Fig. 21 bis 23 ein Kombinationsset in Alleinstellung offenbaren, das den Werkzeughalter 23, die Schneidplatte 25 und die Schneidplatteneinführvorrichtung 1 umfasst.

Fig. 24 zeigt eine Schneidplatteneinführvorrichtung 58, bei der es sich um eine Schneidplatteneinführvorrichtung nach einer zweiten Ausführungsform handelt. Die Schneidplatteneinführvorrichtung 58 ist analog zur Schneidplatteneinführvorrichtung 1 aufgebaut, bis auf die Tatsache, dass sie keine Korridordachfläche 14 und weitere Korridordachfläche 18 sowie die daran angeschlossenen Bereiche aufweist, sodass insoweit zur Schneidplatteneinführvorrichtung 1 identische Bezugszeichen verwendet werden und insoweit auch auf die Fig. 1 bis Fig. 15 verwiesen wird. Der Einführkorridor 4 der Schneidplatteneinführvorrichtung 58 ist aufgrund der fehlenden Korridordachfläche 14 und fehlenden weiteren Korridordachfläche 18 sowie der fehlenden daran angeschlossenen Bereiche entlang der Nutmittentiefachse 8 gegenüberliegend zur Aufstecknut 3 axial offen. Die Schneidplatteneinführvorrichtung 58 weist eine analog zur Haubenstruktur 19 ausgeformte und angeordnete Haubenstruktur 59 auf, deren Haubenwandung 60 jedoch aufseiten der nicht mehr vorhandenen Korridordachfläche 14 abgeschnitten ist. Die Schneidplatteneinführvorrichtung 58 ist aufseiten der Korridorbodenfläche 5 und Korridorseitenfläche 6 der Schneidplatteneinführvorrichtung 1 funktional analog ausgebildet und kann folglich analog zur Führung der Schneidplatte 25 in den Klemmsitz 24 verwendet werden und Teil des Werkzeughaltersets 22, des Schneidplattensets und Kombinationssets sein.

## Patentansprüche

1. Schneidplatteneinführvorrichtung, umfassend einen Grundkörper (2) mit einer Aufstecknut (3) und einem Einführkorridor (4) mit einer Korridorbodenfläche (5) und einer Korridorseitenfläche (6), wobei die Aufstecknut (3) mittig parallel entlang einer Nutmittenlängsachse (7) in die Länge, mittig parallel entlang einer senkrecht dazu verlaufenden Nutmittentiefachse (8) in die Tiefe und entlang einer senkrecht zur Nutmittenlängsachse (7) und Nutmittentiefachse (8) verlaufenden Nutquerachse (9) in die Breite erstreckt ist, wobei eine Nutmittenlängsebene (10) durch die Nutmittenlängsachse (7) und die Nutmittentiefachse (8) aufgespannt ist, wobei die Aufstecknut (3) ein bezüglich der Nutmittenlängsachse (7) axial offenes Aufstecknutende (12) und eine Nutbreite (11) im Bereich von 0,1 mm bis 15 mm aufweist, wobei der Einführkorridor (4) bezüglich der Nutmittenlängsachse (7) axial beidseits offen ist, wobei die Korridorbodenfläche (5) ausgehend von dem Aufstecknutende (12) durch die Aufstecknut (3) unterbrochen ist, wobei die Korridorbodenfläche (5) im Bereich der Aufstecknut (3) parallel zur Nutmittenlängsachse (7) erstreckt ist und/oder gegenüberliegend zum Aufstecknutende (12) parallel zur Nutmittenlängsachse (7) an die Aufstecknut (3) heranreichend erstreckt ist, wobei die Korridorseitenfläche (6) durch eine Seitenführungsebene (13) tangierend begrenzt und in Blickrichtung entlang der Nutmittenlängsachse (7) neben und aufseiten der Aufstecknut (3) erstreckt ist, wobei die Seitenführungsebene (13) parallel entlang der Nutmittenlängsebene (10) erstreckt ist.

2. Schneidplatteneinführvorrichtung nach Anspruch 1, wobei der Einführkorridor (4) gegenüberliegend von der Korridorseitenfläche (6) zumindest abschnittsweise offen ist.

3. Schneidplatteneinführvorrichtung nach einem der vorhergehenden Ansprüche, wobei die Nutbreite (11) der Aufstecknut im Bereich von 0,2 mm bis 1,1 mm liegt.

4. Schneidplatteneinführvorrichtung nach einem der vorhergehenden Ansprüche, wobei der Einführkorridor (4) aufseiten der Korridorbodenfläche (5) eine Korridordachfläche (14) aufweist, die entlang der Nutmittentiefachse (8) gegenüberliegend zur Korridorbodenfläche (5) angeordnet und der Korridorbodenfläche (5) folgend erstreckt ist.

5. Schneidplatteneinführvorrichtung nach Anspruch 4, wobei der Grundkörper (2) aufseiten der Korridordachfläche (14) eine weitere Aufstecknut (15) aufweist, die mittig parallel entlang der Nutmittenlängsachse (7) in die Länge, mittig parallel entlang der Nutmittentiefachse (8) in die Tiefe und entlang der Nutquerachse (9) in die Breite erstreckt ist, wobei die weitere Aufstecknut (15) aufseiten des axial offenen Aufstecknutendes (12) ein bezüglich der Nutmittenlängsachse (7) axial offenes weiteres Aufstecknutende (17) aufweist, wobei die Korridordachfläche (14) ausgehend von dem axial offenen weiteren Aufstecknutende (17) durch die weitere Aufstecknut (15) unterbrochen ist.

6. Schneidplatteneinführvorrichtung nach Anspruch 4, wobei der Einführkorridor (4) eine weitere Korridorbodenfläche und/oder eine weitere Korridordachfläche (18) aufweist, wobei die weitere Korridorbodenfläche beziehungsweise weitere Korridordachfläche konvex verrundet oder gegenüber der Nutmittenlängsachse (7) angewinkelt erstreckt ist, wobei der Einführkorridor (4) beginnend gegenüberliegend von dem Aufstecknutende (12) und fortschreitend entlang der Nutmittenlängsachse (7) durch die weitere Korridorbodenfläche beziehungsweise weitere Korridordachfläche (18) bezüglich der Nutmittentiefachse (8) verjüngt ist und so in den Bereich der Korridorbodenfläche (5) übergeht.

7. Schneidplatteneinführvorrichtung nach einem der vorhergehenden Ansprüche, wobei die Korridorbodenfläche (5) in Blickrichtung entlang der Nutmittenlängsachse (7) V-förmig eingewölbt oder V-förmig ausgewölbt ausgeformt ist.

8. Schneidplatteneinführvorrichtung nach einem der vorhergehenden Ansprüche, wobei der Grundkörper (2) monolithisch ausgebildet ist.

9. Schneidplatteneinführvorrichtung nach einem der vorhergehenden Ansprüche, wobei der Grundkörper (2) eine Haubenstruktur (19,59), Stiftstruktur und/oder Spannklemmenstruktur aufseiten des Aufstecknutendes aufweist, wobei die Haubenstruktur (19,59) in Blickrichtung entlang der Nutmittenlängsachse (7) und auf das Aufstecknutende (12) axial offen ist.

10. Schneidplatteneinführvorrichtung nach Anspruch 9, wobei die Haubenstruktur (19,59) eine sich bezüglich der Nutmittenlängsachse (7) umfänglich erstreckende Haubenwandung (20,60) aufweist, die einen axial offenen Haubeninnenbereich (21) zumindest abschnittsweise umfänglich umgibt.

11. Werkzeughalterset, umfassend eine Schneidplatteneinführvorrichtung nach einem der vorhergehenden Ansprüche und einen Werkzeughalter (23) mit einem Klemmsitz (24) zur klemmenden Halterung von einer Schneidplatte (25), wobei dem Klemmsitz (24) eine untere Klemmbacke (26) und eine gegenüber dieser durch einen Klemmspalt (27) des Werkzeughalters (23) federnd gelagerte obere Klemmbacke (28) zugeordnet sind, wobei die Aufstecknut (3) einem vorderen Bereich (29) der unteren Klemmbacke korrespondierend ausgeformt ist.

12. Werkzeughalterset nach Anspruch 11, wobei der Grundkörper (2) die in Anspruch 9 oder 10 definierte Haubenstruktur (19) und/oder die in Anspruch 9 definierte Stiftstruktur und/oder die in Anspruch 9 definierte Spannklemmenstruktur aufseiten des Aufstecknutendes (12) aufweist und so zum Aufsetzen des Grundkörpers (2) auf den Werkzeughalter (23) außerhalb des Klemmsitzes (24) ausgebildet ist.

13. Schneidplattenset, umfassend eine Schneidplatteneinführvorrichtung nach einem der Ansprüche 1 bis 10 und eine Schneidplatte (25), wobei die Schneidplatte (25) eine Schneidplattendachfläche (46) mit einer Hauptschneide (44), eine daran angeschlossene Spanfläche (45) und eine gegenüberliegende Schneidplattenbodenfläche (47) aufweist, wobei die Schneidplattenbodenfläche (47) mittig parallel entlang einer Schneidplattenmittenlängsachse (48( erstreckt ist, wobei die Schneidplatte (25) eine mit der Hauptschneide verbundene vordere Schneidplattenstirnfläche (49) und eine gegenüberliegende hintere Schneidplattenstirnfläche (50) aufweist, wobei die Schneidplatte (25) eine mit der vorderen Schneidplattenstirnfläche (49) und der hinteren Schneidplattenstirnfläche (50) verbundene rechte Schneidplattenseitenfläche (51) und gegenüberliegend eine linke Schneidplattenseitenfläche (52) aufweist, wobei die rechte Schneidplattenseitenfläche (51) und die linke Schneidplattenseitenfläche (52) gegenüberliegend zueinander jeweils einen ebenen Seitenflächenabschnitt (53) aufweisen, der unter einer Führung entlang der Korridorseitenfläche (6) parallel zur Nutmittenlängsebene (7) ausgerichtet ist, wobei die Schneidplattenmittenlängsachse (48) unter einer Führung der Schneidplattenbodenfläche (47) entlang der Korridorbodenfläche (5) parallel zur Nutmittenlängsachse (7) ausgerichtet ist, wobei die Schneidplatte (25) im Bereich der ebenen Seitenflächenabschnitte (53) eine maximale Schneidplattenbreite (55) der Schneidplatte (25) definiert, wobei die maximale Schneidplattenbreite (55) betragsmäßig zumindest so groß ist wie ein Schneidbreite (56) der Schneidplatte (25), wobei die Seitenführungsebene (13) entlang der Nutquerachse (9) bemessen unter einem Abstand (39) zur Nutmittenlängsebene (10) beabstandet ist, der betragsmäßig halb so groß ist wie die maximale Schneidplattenbreite (55).

14. Kombinationsset, umfassend eine Schneidplatteneinführvorrichtung nach einem der Ansprüche 1 bis 10, den in Anspruch 11 oder 12 definierten Werkzeughalter und die in Anspruch 13 definierte Schneidplatte (25), wobei der Klemmsitz (24) zur klemmenden Halterung dieser Schneidplatte (25) ausgeformt ist und die Schneidplatteneinführvorrichtung zum Aufstecken auf die untere Klemmbacke (26) des Klemmsitzes (24) und zur Führung der Schneidplatte (25) ausgeformt sind.
